# NEW EUROPEAN PATENT SPECIFICATION

(11) **EP 2 574 644 B2**
(45) Date of publication and mention of the opposition decision: **02.11.2022**
(45) Mention of the grant of the patent: 10.02.2016
(21) Application number: 12191610.0
(22) Date of filing: 18.05.2009
(51) Int. Cl.: C09D 5/00, C09D 201/02, C09D 101/26, C09D 103/02, C09D 103/06, C09D 103/08, C09D 105/08, C09D 129/04, C09D 133/26, C09D 139/02, C08J 7/043, C09J 7/40, D21H 19/20, D21H 19/24, D21H 27/06, D21H 27/20, D21H 19/82, D21H 19/10, D21H 17/34, C09D 101/32

(54) **RELEASE LINER BASE MATERIAL, METHOD FOR PRODUCING IT AND USE THEREOF**
TRENNPAPIER-BASISMATERIAL, VERFAHREN ZU DESSEN HERSTELLUNG UND SEINE VERWENDUNG
MATÉRIEU DE BASE DE DÉCOLAGE, PROCÉDÉ POUR SA FABRICATION ET SON UTILISATION

(30) Priority: 03.06.2008 FI 20085543
(43) Date of publication of application: 03.04.2013
(62) Divisional of application: 09757661.5
(73) Proprietor: UPM Specialty Papers Oy, 00100 Helsinki (FI)
(72) Inventor: Koskinen, Kaj, 37630 Valkeakoski (FI); Rissanen, Mikko, 02700 Kauniainen (FI); Tani, Petri, 47910 Hillosensalmi (FI); Kivivasara, Jukka, 37630 Valkeakoski (FI); Koskinen, Timo, 37600 Valkeakoski (FI); Kosonen, Harri, 53300 Lappeenranta (FI); Pohjola, Leila, 03220 Tervalampi (FI); Saarinen, Jarkko, 20520 Turku (FI); Seppälä, Jukka, 00320 Helsinki (FI); Salminen, Arto, 02140 Espoo (FI)
(74) Representative: Cohausz & Florack

(56) References cited:
- EP-A1- 0 399 079
- EP-A1- 0 563 704
- WO-A1-01/55507
- WO-A1-2005/071161
- US-A- 5 358 977
- US-A- 5 807 781
- US-A1- 2006 204 703
- US-A1- 2007 004 859
- Olivier Paquet, Thesis on Cellulose surface modification with organosilanes, Grenoble University, 2012

## Description

Release coatings, such as silicone coatings, have been used for enhancing release properties of a substrate, such as a paper, film or a plastic coated paper substrate. The silicone coating may form a release layer for a release liner, or the silicone coating may be, for example, a functional layer of a baking paper.

When production of high-quality label backing products, i.e. release liners, with good silicone adhesion and low silicone rub-off is desired, special attention must be paid to the quality of the non-siliconized base material. Conventionally, high-quality release liners and a good control of the silicone adhesion have been required. Developments in label products result in increasingly challenging demands on release liners.

Essential measures of the quality of release liner are the adhesion of the silicone coating to the base material and the lack of pinholes due to excessive silicone penetration. The minimization of the amount of silicone coating is also a central goal with respect to economical aspects.

It is possible to prepare the surface to be treated by using either physical or chemical methods. The purpose of both methods is to adjust the penetration of the silicone coating into the pore structure of the base material and adhesion of silicone layer in a controlled manner. When the substrate material of the release liner is made of paper, the most important physical working technique is calendering of the paper, in which heat and pressure are used to compress the fibres into a more compact network with less pores.

Pursuing for pinhole-free release liners that have been coated with low amounts of silicone has led to new preparation methods. With new preparation methods the quality of the release liner has improved and silicone consumption has decreased without sacrificing the quality of the end product. However, some new manufacturing methods may lead to problems with silicone anchorage, and serious rub-off of silicone coating has been observed.

One reason for poor silicone anchorage is that the speed of the coating machines, which have been used to form a release coating, such as a release layer, have increased. This means that the compounds of the release layer must anchor to the surface of a base material relatively quickly, i.e. the cross-linking should take place rather fast. Further, one aim is to reduce the amount of platinum catalyst which is a contradictory aim with respect to the quick cross-linking.

Publication WO 2005/071161 addresses the anchorage issue. The publication discloses a cellulose fiber based support intended to be siliconized. The publication suggests that a support based on cellulose fibres is grafted with at least one organic molecule provided with a functional group capable of creating a covalent bond with the free OH functional groups of the cellulose, and the organic molecule comprises a vinylic functional group. Petroleum ether is used as a solvent for the grafting agent.

However, there are many drawbacks which relate to the use of monomers or small reactive molecules. They may penetrate in to the support, and as they are volatile compounds with a low molecular weight, they may have an unpleasant odour and be irritating. Unreacted monomers or small reactive molecules may also migrate and thereby, prevent the release agent, usually a siliconizing agent, from adhering to the surface of the substrate and, therefore, the release layer unsticks from the surface of the substrate, i.e. rub-off takes place.

A drawback which relates to the practical accomplishment of the grafting is that petroleum ether is used as a solvent for the grafting agent; petroleum ether cannot be used industrially on a paper machine because it is a volatile organic solvent. Another drawback which relates to the practical accomplishment is that processes of paper mills are based on aqueous systems. When the monomers or small reactive molecules are added in water, their capability of creating covalent bonds diminishes drastically in a short period of time because the monomers react with water and they are thus converted to less reactive compounds. On the other hand, if volatile solvents are added in to the process, expensive investments for solvent collection and recycling are required. Further, label products may be utilized in foodstuff packaging, and therefore, any solvent or monomer residues are unacceptable.

Publication US 2007/004859 (A1) discloses a priming agent for separating papers and films, where release papers and films are coated with a primer containing a silane-modified polyvinyl alcohol and an H-siloxane prior to coating with an abhesive silicone release coating. Publication US 2006/204703 (A1) discloses release films or papers with improved properties, which are prepared by employing a binder which is a partly or fully hydrolyzed silane-group-containing polyvinyl alcohol polymer derived from a vinyl ester polymer containing 1-alkylvinylester moieties.

The aim of the present invention is to introduce products to solve the above-mentioned problems. Further, with this invention it is possible to use new formulations which have previously been impossible to use. The release liner base material of the present invention is disclosed in the independent claim 1.

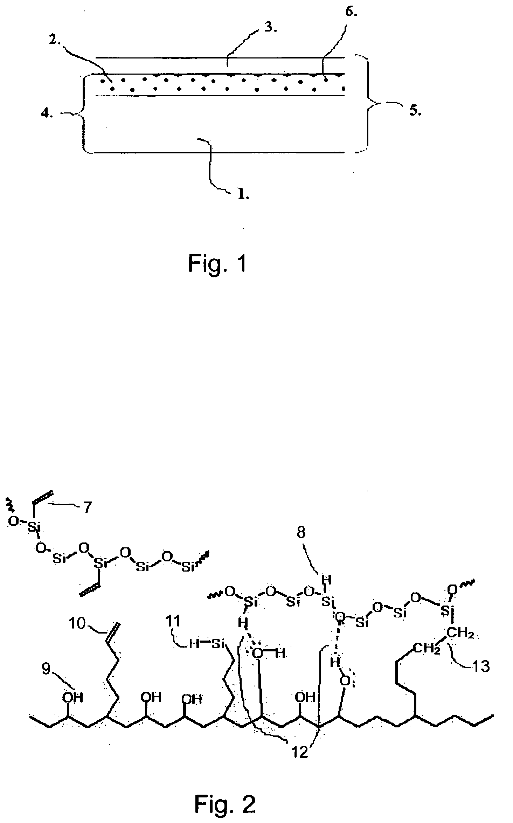

In describing the present invention, certain salient terms will be used. Fig. 1 explains the structure of a release liner according to the invention. The release liner composition comprises a substrate 1, a surface treating layer 2 and a release layer 3. The substrate refers to a paper substrate or a film (plastic) coated paper substrate. The paper substrate may be coated, sized or otherwise surface treated. The base material 4 is a substrate comprising a surface treating layer. The surface treating layer comprises the surface treating agent which comprises at least one end- or side-functionalized block or graft copolymer with groups capable of reacting with a silicone coating. The release liner 5 refers to a product which includes the substrate, the surface treating layer on the surface of the substrate, and the silicone coating on top of the surface treating layer. The silicone coating may be based on, for example, a solvent-containing silicone, solvent free silicone, UV curing silicone, or an emulsion silicone. According to the invention the surface treating agent 6 forms totally or is a part of the surface treating layer or is spread as a primer directly onto the surface of the substrate or onto a layer, such as a coating or a size, on the surface of the substrate.

The present invention involves a surface treating agent and a composition in which the adhesion of silicone is improved and silicone rub-off is prevented. When the surface treating agent is applied on a paper substrate or a film coated paper substrate, a base material is formed. The surface treating layer of the base material is capable of forming covalent bonds at the interface between the silicone coating and the surface treating layer. The improvement of adhesion is based on a structure comprising a moiety or moieties that are compatible with a substrate and/or a coating on the surface of the substrate, and a moiety or moieties that are reactive with the silicone coating.

The novel surface treating agent is based on a functionalized polymer which is capable of bonding with the silicone coating. This provides a major enhancement compared to the former solutions in which the adhesion of the silicone coating has been based on weak forces and physical entanglements.

The functionalized polymer comprises a polymeric backbone, to which functional units, such as functional groups or polymer chains, have been attached. The polymeric backbone is water-soluble and is obtained from a water soluble carrier polymer selected from polyvinyl alcohol, polyethylene glycol, polyethylene oxide, polyvinyl amine, starch, starch ester, starch ether, carboxymethyl cellulose, carboxymethyl cellulose ether, carboxymethyl cellulose ester, xanthan and polyacrylamide. A preferred carrier polymer is polyvinyl alcohol.

Thanks to its structure, the polymeric backbone of the carrier polymer ensures that the surface treating agent does not penetrate deep in to a substrate; the polymeric backbone comprises rather lengthy chains which are capable of remaining on the surface of the substrate. Further, when a carrier polymer is modified by grafting monomers into its structure, the final chemical compound does not contain significant amounts of monomers.

The formed polymer of the invention is a water-soluble, water-dispersible or water-emulsifiable graft or block copolymer. A graft copolymer is produced by attaching functional groups or polymer chains to the backbone of a polymer. The functional groups or polymer chains are capable of forming covalent bonds and reacting with silicon coating via a hydrosilation reaction. A block copolymer is produced by attaching functional polymer blocks to the ends of a skeletal polymer chain to form a block copolymer structure.

In addition to the polymeric backbone provided with functional side or end groups or blocks, it is possible that the surface treating agent comprises other polymers, such as water soluble polymers, which may be selected from the same polymers as the carrier polymers. It is also possible to add pigments, such as organic or inorganic pigments, to the surface treating agent.

The side or end groups of a functionally grafted skeletal polymer may have a general formula of (I) R¹R³R⁴O- or (II) R¹R³O-. In the general formulae (I) and (II), R¹ is an aldehyde or ketone of the form 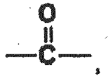 a silane hydride of the form 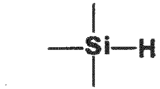 or an unsaturated structure of the form CR⁵₂=CR², in which R² and R⁵ may represent H, a C₁...C₂₀ alkyl chain, a C₁...C₂₀ alkenyl chain, a C₁...C₂₀ fatty acid chain, or a C₁...C₁₀ fatty acid ester chain. In the general formulae (I) and (II), R³ represents a linear or branched, possibly substituted C₁...C₂₀ alkyl or alkenyl chain or an -OSiR₂⁶O group. In the general formula (I), R⁴ represents the carbonyl group (C=O). The R⁶ groups bonded to the silicon atom may be hydroxyl groups, C₁...C₂₀ alkyl or alkoxy chains.

The recurring structural unit of the functional block in a water-soluble skeletal polymer formed by means of functional blocks has the form 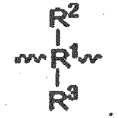 In the general formula, R¹ represents a C₁...C₂₀ alkyl chain, alkenyl chain or the siloxan group (-SiO-). R² and R³ may represent hydrogen, the hydroxyl group (-OH), the silane hydride group 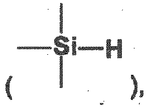 a C₁...C₂₀ alkoxy group, a C₁...C₂₀ alkenyl group or an unsaturated C₁...C₂₀ acyl group.

In practice, the side or end groups of the graft copolymer are formed in a reaction between the carrier polymer and the grafting substance. The grafting substance may be, for example, one of the substances listed below. However, the surface treating agent may comprise end products from reactions between different carrier polymers and grafting substances.

The grafting substances may be:
The organic molecule used as the grafting substance may be an unsaturated halogenic alkene, which is preferably vinyl fluoride, vinyl chloride, vinyl bromide, vinyl iodide, allyl chloride, allyl chloride, allyl bromide, allyl fluoride, or allyl iodide.
The organic molecule used as the grafting substance may be a compound containing silicon atoms, which is preferably trimethoxy vinyl silane, butenyl triethoxy silane, 10-undecenyl dimethyl chlorosilane, 1-vinyl-3-(chloromethyl)-1,1,3,3-tetramethyl disiloxane, vinyl dimethyl silane, vinyl dimethyl ethoxysilane, vinyl tetramethyl disiloxane, or triethoxy vinyl silane.
The organic molecule used as the grafting substance may be an acid that is preferably acrylic acid, 2-propyl acrylic acid, methacrylic acid, itaconic acid, 3-butylenic acid, 4-pentenic acid, 2,4-pentadienic acid, 5-hexenic acid, 6-heptenic acid, 9-decenic acid, or 10-undecenic acid.
The organic molecule used as the grafting substance may be an acid chloride which is preferably acrylic acid chloride, methacrylic acid chloride, 4-pentenic acid chloride, or 10-undecenic acid chloride.
The organic molecule used as the grafting substance may be an acid anhydride which is preferably methacrylic acid anhydride, itaconic acid anhydride, or 4-pentenic acid anhydride.
The organic molecule used as the grafting substance may be an acid ester which is preferably monoacrylate ester, a monomethacrylate ester, monoitaconic acid ester, mono-3-butenoate ester, mono-4-pentenoate ester, mono-2,4-pentadienoate ester, mono-5-hexenoate ester, mono-6-heptenoate ester, mono-9-decenoate ester, or mono-10-undecenoate ester.

According to one advantageous embodiment of the present invention, the surface treating agent comprises a polymeric backbone which comprises at least one functional end group comprising a vinyl group having the formula -CH=CH₂. Such functional groups include, for example, vinyl, allyl, acrylic, methacrylic, 4-pentenylic and 10-undecenylic groups.

The carrier polymer which has been grafted to contain functional end groups comprising the vinyl group may be prepared in a reaction between a water soluble polymer, and a grafting substance, such as an acid, an acid chloride, or an acid anhydride. The degree of substitution may be at the highest 50 mol-%. The degree of substitution does not need to be high because the surface treating agent is capable of remaining on the surface of the substrate, and thus the grafted chains are available for forming bonds with the release agent, such as a silicon release agent.

For example, the surface treating agent may be obtained from a reaction between polyvinyl alcohol and a grafting substance, such as 10-undecenyl chloride, 4-pentenyl chloride, methacrylic acid chloride or acrylic acid chloride. Also other carrier polymers listed above are suitable for this purpose.

The surface treating agent is applied on a substrate in an aqueous solution, dispersion or suspension. Besides the surface treating agent, the solution may contain auxiliary chemicals and/or inorganic particles. The substrate comprises paper making fibers, i.e. fibers which are usually obtained from trees. In regard to the fiber contents of the substrate, the substrate may consist mainly or completely of chemical pulp. In addition to the paper making fibers, non-wood fibers are also possible. The surface treating is preferably performed with a film size press, and after that the surface treating agent is dried. However, any other application method is feasible, such as roll application, spraying, or curtain coating.

The typical substrate for a release liner is paper, for instance the glassine paper. The glassine refers to a paper which is made of chemical pulp and whose grammage is typically from 50 to 150 g/m². Good transparency is typically required of the glassine paper; for a 60 g/m² paper, it is typically at least 45, measured with visible light (ISO 2469:1994). In the manufacture of the glassine paper, paper pulp is ground finely so that a dense, substantially unporous paper is achieved. Because glassine paper is used as the base paper for release paper, a poreless surface is a requirement for good siliconizability. The poreless surface can be achieved with calendering treatments and surface treating. The paper can be either calendered first and then surface treated, or surface treated first and then calendered. The calender can be a multi-nip calender or a supercalender. In the calender, at least one nip is formed between a hard-faced roll and a soft counter surface.

After applying the surface treating agent on the base paper, the paper is siliconized. The hydrosilation reaction takes place between the reactive surface treating layer and the silicon-containing release agent coated on top of the surface treating layer. Thus, a firm bond is formed between the paper and the silicon coating. The surface treating agent may make up from 0.01 to 100 percent of the total weight of the surface treating layer. In other words, only 1 to 2 mg/m² or even less may be required to prevent rub-off of silicone.

Further, the substrate may be made of a film coated paper.

The use of the base material concerns the use for release liners. However, also other uses, in which good silicon adhesion is required, are possible.

Fig. 1 shows the structure of a release liner made according to the invention,
Fig. 2 shows some advantageous mechanisms according to the invention, and
Fig. 3 shows for illustration some polymer structures (15, 18 according to the invention: 16, 17, 19 not according to the invention).

Figure 2 shows some of the advantageous mechanisms according to the invention. The reactive silicone coating preferably contains vinyl silane 7 and silane hydride 8 groups which crosslink the release coating in hydrosilation reaction. When the substrate is made of paper and it is sized by using conventionally used sizing polymers there are hydroxyl groups which do not easily react with the reactive groups of the silicone coating. Thus, the interaction between the paper and the silicone coating only takes place through hydrogen bonds 12. However, the substrate may be coated with a surface treating agent containing vinylic 10 groups, which can react with the silicone coating and form covalent bonding 13 across the interface.

With the present method it is possible to bring about covalent bonding to the interface between silicone coating and the surface treating layer. The covalent bonding is possible if the surface treating layer contains functional polymers that are capable of reacting with the silicone coating.

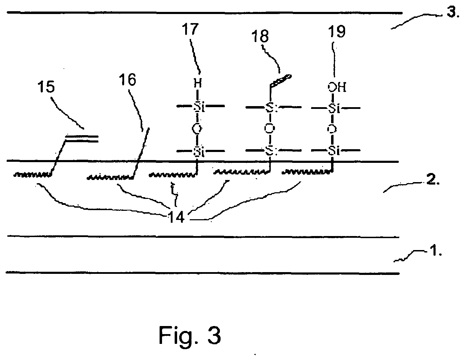

Figure 3 shows some advantageous polymer structures usable as a surface treating layer to provide better adhesion between the silicone coating and the base material. The release liner comprises a substrate 1 which is preferably a plastic film or a substrate based on cellulose fibers. The substrate may be coated or sized in order to smoothen out the porous fibre surface and to minimize the consumption of silicone coating by preventing excessive penetration of silicone into the fibre network.

In Figure 3, the base material comprising a surface treating layer 2 is preferably coated with a silicone layer 3, which is responsible for easy delamination of labels in the end product. The adhesion of the silicon layer to the base material can be improved by using functionalized reactive polymers, i.e. a surface treating agent, which comprise both a moiety 14 that is compatible with the substrate, the sizing polymers or the coating on the surface of the substrate, and a moiety 15 - 19 that is reactive or compatible with the silicone coating 3 (15, 18 according to the invention; 16, 17, 19 not). The reactive moiety preferably contains vinylic 15 or vinyl silane 18 end or side groups which can react with silicone coatings in a hydrosilation reaction. The silicone-compatible moiety is for example an oligomeric or polymeric hydrocarbon 16 or polysiloxane 19 which can improve the adhesion of silicon layer by mixing and physical bonding.

The surface treating agent may be a part of a coating or a size which is applied on the surface of the substrate, or the surface treating agent may be applied on the surface of the substrate as such. The surface treating agent may be applied directly to the surface of the substrate, or on top of the coating or the size.

### Example 1.

### Polyvinyl alcohol grafted with 10-undecenyl groups

Dry polyvinyl alcohol (20 g, 0.3 mmol, degree of hydrolysis 98 %) and N-methyl pyrrolidone (400 ml) are placed in a beaker flask. The polyvinyl alcohol is dissolved by heating the mixture at 120°C for 4 h. The solution is allowed to cool down to room temperature under stirring. After the solution has cooled down, it is placed under nitrogen flow, and 10-undecenyl chloride (2.71 g, 13.3 mmol) dissolved in N-methyl pyrrolidone (10 ml) is added. The mixture is stirred for 15 min, after which pyridine (35.2 g, 0.44 mol) and dimethyl amino pyridine (5.44 g, 44.5 mmol) are added into the mixture. The reaction is allowed to proceed at room temperature for 48 h under stirring and under a nitrogen flow. The solution phase is collected, and the polymer is precipitated by feeding the solution into acetone by means of a dropping funnel. Purification of the polymer is performed twice by dissolving the polymer into water and precipitating it in acetone. The product is separated from the solution by means of a centrifuge. Finally, the product is dried in a vacuum at room temperature for 8 h.

### Example 2.

### Polyvinyl alcohol grafted with 4-pentenyl groups

Dry polyvinyl alcohol (20 g, 0.3 mmol, degree of hydrolysis 98 %) and N-methyl pyrrolidone (400 ml) are placed in a beaker flask. The polyvinyl alcohol is dissolved by heating the mixture at 120°C for 4 h. The solution is allowed to cool down to room temperature under stirring. After the solution has cooled down, it is placed under nitrogen flow, and 4-pentenyl chloride (2.64 g, 22.2 mmol) dissolved in N-methyl pyrrolidone (10 ml) is added. The mixture is stirred for 15 min, after which pyridine (35.2 g, 0.44 mol) and dimethyl amino pyridine (5.44 g, 44.5 mmol) are added into the mixture. The reaction is allowed to proceed at room temperature for 48 h under stirring and under a nitrogen flow. The solution phase is collected, and the polymer is precipitated by feeding the solution into acetone by means of a dropping funnel. Purification of the polymer is performed twice by dissolving the polymer into water and precipitating it in acetone. The product is separated from the solution by means of a centrifuge. Finally, the product is dried in a vacuum at room temperature for 8 h.

### Example 3.

### Polyethylene glycol end-functionalized with allyl groups

Polyethylene glycol (30 g, 15 mmol) is placed in a separate beaker flask and the polymer is dried *in vacuo* at 105°C for 3 h. After drying *in vacuo,* the polyethylene glycol is dissolved with tetrahydrofuran (300 ml) at room temperature and the solution is bubbled with nitrogen for 15 min. Sodium hydride (0.86 g, 36 mmol), tetrahydrofuran (50 ml) and a magnetic stirrer are placed in the reaction flask. The suspension is bubbled with nitrogen for 15 min. The sodium hydride suspension is put in an ice bath. The polyethylene oxide solution is transferred inertly to the suspension using nitrogen atmosphere. The reaction mixture is put in an oil bath and refluxed for 20 h under stirring and nitrogen atmosphere. Allyl bromide (4.35 g, 36 mmol) is added to the reaction mixture inertly and the mixture is further refluxed for 20 h under stirring and nitrogen atmosphere. The solution phase is collected with a centrifuge and the polymer is precipitated with cyclohexane. Purification of the polymer is performed twice by dissolving the polymer into methylene chloride and precipitating it in acetone. The product is separated from the solution by means of a centrifuge. Finally, the product is dried in a vacuum at 35 °C for 8 h.

### Interface reaction of allyl-functional polyethylene glycol with silane hydride

Allyl-functional polyethylene glycol (2.5 g, 1.25 mmol) is dissolved in distilled water (100 g, 5.56 mol) at room temperature. The polymer model surface is prepared by casting. The polymer solution is applied on silicon wafer and the film is dried at 60 °C for 30 min. Siliconizing com position is prepared by mixing Platinum(0)-1,3-divinyl-1,1,3,3-tetramethyldisiloxane complex (25 µl) with hydride terminated polydimethylsiloxane (5 g, 8.3 mmol). The siliconizing composition is applied on the polymer model surface and hydrosilylation is performed at 140 °C for 2 min. The siliconized mode I surface is washed twice in cyclohexane (50 ml) to remove the unreacted hydride terminated polydimethylsiloxane. The reacted polymer is dissolved from silicon surface with dichloromethane (5 ml) for further analysis with Size Exclusion Chromatography. Chromatography indicated that a polymer structure with higher molecular weight, approximately the sum of the molecular weights of the allyl-functional polyethylene glycol and hydride terminated polydimethylsiloxane, is produced during hydrosilylation at 140 °C, thus indicating a hydrosilylation reaction at the interface.

### Example 4.

### Background

PVA derivatives were synthesized and double-bonded side chains were attached to OH groups. In the tests, two kinds of side chains were used, both including a double bond at one end and 5 carbons in some side chains (4-pentenoyl chloride) and 11 carbons in the other side chains (10-undecenoyl chloride). With the shorter side chains, two different chemicals were prepared, in which nominally 3% and 7% of the OH groups were replaced with side chains, respectively.

### Preparation of samples

Two different base papers, A and B, were used in the tests. Both were normal production grades.

The PVA derivatives to be tested and the commercial PVA (degree of hydrolysis 98 %) were dissolved in water (10 wt.-%), and the solutions were applied with a blade onto the surface of the papers to be tested. About 0.2 to 0.3 g/m² of the chemicals to be tested was transferred to the surface of the paper.

The papers were air conditioned for at least 1 hour before the siliconization. The silicon used in the tests was a commercial siliconizing agent, and it was prepared just before the siliconization. The silicon was applied with a blade and cured immediately by infrared radiation and a hot cylinder. About 1.3 g/m² of silicon was transferred onto the paper.

Rub off was tested immediately after the siliconization and during treatment under a moisture hood (*T* = 50°C and moisture RH 75 %) as a function of time. The effect of a commercial label on the production of rub off was studied at the same time (acrylate adhesive).

### Results

The rub off results are shown in Table 1. For paper A, rub off can be detected after about 5 weeks, and for paper B already in about a week. With unmodified PVA, changes are detected after about 4 weeks, irrespective of the paper used. With PVA that contains side chains with double bonds, no rub off was detected during the test period.

**Table 1: The development of rub off of reference papers with unmodified PVA and modified PVA at the temperature of 50°C and at the moisture of RH 75% as a function of time. (1 = good quality, no rub off; 2 = rub off detected; and 3 = distinct rub off). Symbols in the table: Cx: x carbons in the side chain, nominally y% of the OH groups replaced with side chains in the PVA, a: paper area without label, and b: area under label.**

| | 0h | 1 wk | | 2 wk | | 3 wk | | 4 wk | | 5 wk | | 6 wk | | 9 wk | |
|---|---|---|---|---|---|---|---|---|---|---|---|---|---|---|---|
| Sample | a | a | b | a | b | a | b | a | b | a | b | a | b | a | b |
| Paper A | 1 | 1 | 1 | 1 | 1 | 1 | 1 | 1 | 1 | 1 | 2 | 1 | 3 | 3 | 3 |
| Paper B | 1 | 1 | 2 | 3 | 3 | 3 | 3 | 3 | 3 | 3 | 3 | 3 | 3 | 3 | 3 |
| PVA (Paper A) | 1 | 1 | 1 | 1 | 1 | 1 | 1 | 1 | 2 | 2 | 3 | 3 | 3 | 3 | 3 |
| PVA (Paper B) | 1 | 1 | 1 | 1 | 1 | 1 | 1 | 1 | 2 | 2 | 3 | 3 | 3 | 3 | 3 |
| C5-3% Paper A) | 1 | 1 | 1 | 1 | 1 | 1 | 1 | 1 | 1 | 1 | 1 | 1 | 1 | 1 | 1 |
| C5-3% (Paper B) | 1 | 1 | 1 | 1 | 1 | 1 | 1 | 1 | 1 | 1 | 1 | 1 | 1 | 1 | 1 |
| C5-7% (Paper A) | 1 | 1 | 1 | 1 | 1 | 1 | 1 | 1 | 1 | 1 | 1 | 1 | 1 | 1 | 1 |
| C5-7% (Paper B) | 1 | 1 | 1 | 1 | 1 | 1 | 1 | 1 | 1 | 1 | 1 | 1 | 1 | 1 | 1 |
| C11-2% (Paper A) | 1 | 1 | 1 | 1 | 1 | 1 | 1 | 1 | 1 | 1 | 1 | 1 | 1 | 1 | 1 |
| C11-2% (Paper B) | 1 | 1 | 1 | 1 | 1 | 1 | 1 | 1 | 1 | 1 | 1 | 1 | 1 | 1 | 1 |

### Summary

The tests carried out show that the polymeric backbone provided with double bonds reduces the rub off and is more resistant to tropical conditions under which problems are caused in reference papers.

### Example 5.

### Background

PVA derivatives were synthesized and double-bonded side chains were attached to OH groups. In this test series one kind of side chain was used, containing a double bond at one end and 5 carbons (4-pentenoyl chloride). Nominally 5 % of the OH groups were replaced with side chains. The number of double bonds is quite high and it is probable that much fewer bonds could reduce the rub off considerably. On the other hand, coating pastes are normally mixtures of many components. In the test series, modified PVA was mixed with commercial PVA grades in order to test the efficiency of modified PVA.

### Preparation of samples

One production grade of glassine paper (Paper C) was used in the tests.

Two different commercial PVA grades, A and B, and one PVA derivate, C5-5%, were used in the tests. The degrees of hydrolysis of the commercial PVA grades A and B were 99 % and 98 %, respectively. All PVAs were dissolved in water, and PVA derivative was mixed with commercial PVA grades in ratios 0:100, 1:99, 5:95, and 100:0. The treatment solutions were applied with a blade onto the surface of the papers to be tested. About 0,1 to 0,2 g/m² of the treating chemicals to be tested was transferred to the surface of the paper.

The papers were air conditioned for at least 1 hour before the siliconization. The siliconizing chemical used in the tests was a commercial siliconizing agent, and it was prepared just before the siliconization. The silicon was applied with a blade and cured immediately by infrared radiation and a hot cylinder. About 1.3 g/m² of silicon was transferred onto the papers.

Rub off was tested immediately after the siliconization and during conditioning under a moisture hood (*T* = 50°C and moisture RH 75 %) as a function of time. The effect of a commercial label on the production of rub off was studied at the same time (acrylate adhesive).

### Results

The rub off results are shown in Table 2. For paper C and for unmodified PVAs, rub off was detected after about 2 weeks. With mixtures containing only 1 % or more of modified PVA with grafted double bonds, no rub off was detected during the test period. Note that PVA B was one starting material of modified PVA, and in a mixture where only one percent of PVA B is replaced with modified PVA, the rub off is prevented.

**Table 2: The development of rub off of reference paper (paper C), paper C coated with unmodified PVAs or the mixtures of unmodified and modified PVA at the temperature of 50°C and at the moisture of RH 75% as a function of time (1 = good quality, no rub off; 2 = rub off detected; and 3 = distinct rub off). PVA A and PVA B have the degree of hydrolysis 99 % and 98 %, respectively. Symbols in the table: Cx-y: x=no. of carbons in the side chain, nominally y= % of the OH groups replaced with side chains in the PVA, a: paper area outside a label, and b: area under a label. Numbers after PVA A, PVA B, and C5-5% denotes partition of these chemicals in the mixture.**

| | 0 h | 1 wk | | 2 wk | | 3 wk | | 4 wk | | 6 wk | | 8 wk | |
|---|---|---|---|---|---|---|---|---|---|---|---|---|---|
| Sample | a | a | b | a | b | a | b | a | b | a | b | a | b |
| Paper C | 1 | 1 | 1 | 1 | 1-2 | 1 | 2 | 1-2 | 3 | 2 | 3 | 2 | 3 |
| PVA A | 1 | 1 | 1 | 1 | 1 | 1-2 | 2 | 1-2 | 3 | 2 | 3 | 2-3 | 3 |
| C5 5% | 1 | 1 | 1 | 1 | 1 | 1 | 1 | 1 | 1 | 1 | 1 | 1 | 1 |
| PVA A 99 + C5-5% 1 | 1 | 1 | 1 | 1 | 1 | 1 | 1 | 1 | 1 | 1 | 1 | 1 | 1 |
| PVA A 95 + C5-5% 5 | 1 | 1 | 1 | 1 | 1 | 1 | 1 | 1 | 1 | 1 | 1 | 1 | 1 |
| PVA B | 1 | 1 | 2 | 1 | 2 | 1 | 3 | 1-2 | 3 | 2 | 3 | 3 | 3 |
| PVA B 99 + C5-5% 1 | 1 | 1 | 1 | 1 | 1 | 1 | 1 | 1 | 1 | 1 | 1 | 1 | 1 |
| PVA B 95 + C5-5% 5 | 1 | 1 | 1 | 1 | 1 | 1 | 1 | 1 | 1 | 1 | 1 | 1 | 1 |

### Summary

The tests carried out show that even the minor amount (1 % out of solid content) of treatment agent containing polymeric backbone grafted with double bonds reduces effectively the rub off, if commercial PVA grades with the high degree of hydrolysis are used. Especially, products are more resistant to tropical conditions under which problems tend to appear in reference paper and in the unmodified PVAs.

### Example 6.

### Background

Rub-off free paper is one important goal of paper liner. Other important goals include having a smooth, low absorbing and pin hole free surface. Many barrier coatings could give a smooth and low absorbing surface, but the rub-off is normally the problem. Commercial and modified PVAs were mixed with two barrier polymer coatings in order to test the efficiency of modified PVA.

### Preparation of samples

One production grade of glassine paper (Paper C) was used in the tests.

One commercial PVA grade, one PVA derivate, C5-5%, and two barrier polymer solutions, A and B, were used in the tests. The degree of hydrolysis of the commercial PVA grade was 99 %. Barrier coatings were commercial and they were used as such. All PVAs were dissolved in water, and barrier polymers, unmodified PVA and modified PVA were mixed in ratios 100:0:0, 20:80:0, 20:75:5, 20:70:10, 20:60:20, 40:60:0, 40:55:5, 40:50:10, and 40:40:20, respectively. Barrier polymers were tested as in pure form and in mixtures containing 20 % and 40 % of them. The rest of the mixtures included mainly the commercial PVA and only minor amounts of modified PVA. The treatment solutions were applied with a blade onto the surface of the papers to be tested. About 0.1 to 0.2 g/m² of the treating chemicals to be tested was transferred to the surface of the paper.

The papers were air conditioned for at least 1 hour before the siliconization. The siliconizing chemical used in the tests was a commercial siliconizing agent, and it was prepared just before the siliconization. The silicon was applied with a blade and cured immediately by infrared radiation and a hot cylinder. About 1.3 g/m² of silicon was transferred onto the papers.

Rub off was tested immediately after the siliconization and during conditioning under a moisture hood (*T* = 50°C and moisture RH 75 %) as a function of time. The effect of a commercial label on the production of rub off was studied at the same time (acrylate adhesive).

### Results

The rub off results are shown in Table 3. For these two barrier polymers and for mixtures of the barrier polymer and commercial PVA, distinct rub off was detected immediately after siliconizing. With the samples, in which a small part of commercial PVA was replaced with the modified PVA containing grafted double bonds, the risk for the rub off was considerably diminished or totally prevented. Note that the amount of PVA does not change when modified PVA is added. The amount of modified PVA needed to prevent rub off increased with the amount of barrier polymers in solution.

Table 3: The development of rub off of in mixtures containing barrier polymer, A or B, commercial PVA, and modified PVA at the temperature of 50°C and at the moisture of RH 75% as a function of time (1 = good quality, no rub off; 2 = rub off detected; and 3 = distinct rub off). Symbols in the table: a: paper area outside a label, b: area under a label, numbers after barrier polymer, PVA, and M (modified PVA containing grafted side chains with double bonds, 5 carbons and nominally 6 % of OH groups replaced with side chains) denote partition of these chemicals in the mixture.

| | 0h | 1 wk | | 2 wk | | 4 wk | | 6 wk | | 8 wk | |
|---|---|---|---|---|---|---|---|---|---|---|---|
| Sample | a | a | b | a | b | a | b | a | b | a | b |
| Barrier A | 3 | 3 | 3 | 3 | 3 | 3 | 3 | 3 | 3 | 3 | 3 |
| Barrier A 20 PVA 80 | 3 | 3 | 3 | 3 | 3 | 3 | 3 | 3 | 3 | 3 | 3 |
| Barrier A 20 PVA 75 M5 | 1 | 1 | 1 | 1 | 1 | 1 | 1 | 1 | 1-2 | 1 | 1-2 |
| Barrier A 20 PVA 70 M10 | 1 | 1 | 1 | 1 | 1 | 1 | 1 | 1 | 1-(2) | 1 | 1-(2) |
| Barrier A 20 PVA 60 M20 | 1 | 1 | 1-2 | 1 | 1 | 1 | 1 | 1 | 1-(2) | 1 | 1-(2) |
| Barrier A 40 PVA 60 | 3 | 3 | 3 | 3 | 3 | 3 | 3 | 3 | 3 | 3 | 3 |
| Barrier A 40 PVA 55 M5 | 1 | 1-2 | 2 | 2 | 2 | 2 | 2-3 | 2 | 3 | 2 | 3 |
| Barrier A 40 PVA 50 M 10 | 1 | 1 | 1 | 1 | 1 | 1 | 1-2 | 1 | 1-2 | 1 | 1-2 |
| Barrier A 40 PVA 40 M20 | 1 | 1 | 1 | 1 | 1 | 1 | 2 | 1 | 1-2 | 1 | 2 |
| Barrier B | 3 | 3 | 3 | 3 | 3 | 3 | 3 | 3 | 3 | 3 | 3 |
| Barrier B 20 PVA 80 | 3 | 3 | 3 | 3 | 3 | 3 | 3 | 3 | 3 | 3 | 3 |
| Barrier B 20 PVA 75 M5 | 1 | 1 | 1 | 1 | 1 | 1 | 1 | 1 | 1-(2) | 1 | 1 |
| Barrier B 20 PVA 70 M10 | 1 | 1 | 1 | 1 | 1 | 1 | 1 | 1 | 1 | 1 | 1 |
| Barrier B 20 PVA 60 M20 | 1 | 1 | 1 | 1 | 1 | 1 | 1 | 1 | 1 | 1 | 1 |
| Barrier B 40 PVA 60 | 3 | 3 | 3 | 3 | 3 | 3 | 3 | 3 | 3 | 3 | 3 |
| Barrier B 40 PVA 55 M5 | 3 | 3 | 3 | 3 | 3 | 3 | 3 | 3 | 3 | 3 | 3 |
| Barrier B 40 PVA 50 M 10 | 1 | 1 | 1 | 1 | 1 | 1 | 1 | 1 | 1 | 1 | 1 |
| Barrier B 40 PVA 40 M20 | 1 | 1 | 1 | 1 | 1 | 1 | 1 | 1 | 1 | 1 | 1 |

### Summary

The tests carried out show that with modified PVA, more complicated polymer systems can be used to have better barrier properties, because the rub off is prevented with modified PVA containing grafted side chains with double bonds. The amount of modified PVA needed to prevent rub off increased with the amount of barrier polymers in solution.

### Example 7.

### Background

Normal coating pastes contain different components, e.g. pigments, binders and rheology modifiers, and the effect of modified PVA was tested with this kind of pigmented coatings. On the other hand, there are many commercial silicone grades, and the ultimate goal is that modified PVA should lead to the rub off free surface, enabling the use of better barrier coating chemicals, which has been previously totally impossible due to the rub off.

### Preparation of samples

One production grade glassine base paper C was used in the tests.

Commercial pigment, PVA (the degree of hydrolysis was 99 %), two barrier polymers, A and B, carboxy methyl cellulose (CMC), and cross-linker and modified PVA containing side chains with double bonds were used in the tests. Three different coatings were tested:
Coating 1:

| | |
|---|---|
| Pigment | 65 parts |
| PVA | 32 parts |
| CMC | 2 parts |
| Cross-linker A | 1 part |

Coating 2:

| | |
|---|---|
| Pigment | 65 parts |
| PVA | 17 parts |
| Barrier A | 15 parts |
| CMC | 2 parts |
| Cross-linker A | 1 part |

Coating 3:

| | |
|---|---|
| Pigment | 65 parts |
| PVA | 17 parts |
| Barrier B | 15 parts |
| CMC | 2 parts |
| Cross-linker A | 1 part |

Also coatings, in which 7.5 parts of commercial PVA was replaced with modified PVA containing side chains with double bonds, were produced in order to test the effect of modified PVA. The coatings were applied with a blade, and about 1.6 to 1.8 g/m² of the coatings to be tested was transferred to the surface of the paper. All papers were calendered before siliconizing.

The papers were air conditioned for at least 1 hour before the siliconization. Two commercial silicones were used in the tests (Silicone A and B), and they were prepared just before the siliconization. The silicon was applied with a blade and cured immediately by infrared radiation and a hot cylinder. About 1.3 g/m² of silicon was transferred onto the papers.

Rub off was tested immediately after the siliconization and during conditionning under a moisture hood (*T* = 50°C and moisture RH 75 %) as a function of time. The effect of a commercial label on the production of rub off was studied at the same time (acrylate adhesive).

### Results

The rub off results are shown in Table 4. For coating 2 the rub off was detected immediately, but for coatings 1 and 3 after about 8 weeks and 1 week, respectively. The rub off was a little bit clearer with silicone A than B, but results were quite similar. With coatings, where the commercial PVA was partly replaced modified PVA (7.5 parts of modified PVA containing side chains with double bonds, 5 carbons in side chains and nominally 6 % of PVA OH groups were grafted), rub off was not detected during test period.

**Table 4: The development of rub off in mixtures containing commercial pigment, barrier polymers, A or B, PVA, carboxy methyl cellulose (CMC), and cross-linker, and modified PVA at the temperature of 50°C and at the moisture of RH 75% as a function of time (1 = good quality, no rub off; 2 = rub off detected; and 3 = distinct rub off). Compositions of coatings 1, 2, and 3 are represented above. Symbols in the table: a: paper area outside a label, b: area under a label. Coating x + M-PVA means that 7.5 parts of commercial PVA are replaced with modified PVA containing grafted side chains with double bonds (5 carbons and nominally 6 % of OH groups replaced with side chains).**

| | 0 h | 1 wk | | 3 wk | | 6 wk | | 8 wk | | 9 wk | |
|---|---|---|---|---|---|---|---|---|---|---|---|
| Sample | a | a | b | a | b | a | b | a | b | a | b |
| Coating 1, Silicone A | 1 | 1 | 1 | 1 | 1 | 1 | 1 | 1 | 2-3 | 1 | 3 |
| Coating 1, Silicone B | 1 | 1 | 1 | 1 | 1 | 1 | 1 | 1 | 2 | 1 | 2-3 |
| Coating 2, Silicone A | 3 | 3 | 3 | 2 | 2-3 | 3 | 3 | 3 | 3 | 3 | 3 |
| Coating 2, Silicone B | 2 | 3 | 3 | 2 | 2-3 | 3 | 3 | 3 | 3 | 3 | 3 |
| Coasting 3. Silicone A | 1 | 2 | 2-3 | 2 | 2-3 | 2 | 2-3 | 3 | 3 | 3 | 3 |
| Coating 3, Silicone B | 1 | 2 | 2 | 2 | 2 | 2 | 2 | 2 | 2-3 | 2-3 | 3 |
| Coating 1 + M-PVA, Silicone A | 1 | 1 | 1 | 1 | 1 | 1 | 1 | 1 | 1 | 1 | 1 |
| Coating 1 + M-PVA, Silicone B | 1 | 1 | 1 | 1 | 1 | 1 | 1 | 1 | 1 | 1 | 1 |
| Coating 2 + M-PVA, Silicone A | 1 | 1 | 1 | 1 | 1 | 1 | 1 | 1 | 1 | 1 | 1 |
| Coating 2 + M-PVA, Silicone B | 1 | 1 | 1 | 1 | 1 | 1 | 1 | 1 | 1 | 1 | 1 |
| Coating 3 + M-PVA, Silicone A | 1 | 1 | 1 | 1 | 1 | 1 | 1 | 1 | 1 | 1 | 1 |
| Coating 3 + M-PVA, Silicone B | 1 | 1 | 1 | 1 | 1 | 1 | 1 | 1 | 1 | 1 | 1 |

### Summary

The results showed that the treatment agent with polymeric backbone containing grafted side chains with double bonds containing chemical reduces effectively the rub off with pigmented coatings. Modified PVA enables the use of new barrier polymers with improved surface properties and the products that are more resistant to rub off under tropical conditions.

### Example 8.

### Background

Paper coating may comprise many layers, where one improves some properties while the others have other functions. This kind of layered structure was tested where a barrier layer enabled better surface for siliconizing, i.e. lower absorption levels and a smaller number of pin holes. Another layer was spread over this layer in order to reduce a risk for rub off.

### Preparation of samples

One production grade glassine base paper C was used in the tests.

Commercial pigment, PVAs A and B (the degree of hydrolysis were 99 % and 98 %, respectively), one barrier polymer A, carboxy methyl cellulose (CMC), and cross-linker and modified PVA containing side chains with double bonds were used in the tests. Three different coatings were tested:
Coating 1:

| | |
|---|---|
| Pigment | 65 parts |
| PVA A | 32 parts |
| CMC | 2 parts |
| Cross-linker | 1 part |

Coating 2:

| | |
|---|---|
| Pigment | 65 parts |
| PVA A | 16 parts |
| Barrier A | 15 parts |
| CMC | 2 parts |
| Cross-linker | 1 part |

Coating 3:

| | |
|---|---|
| Pigment | 65 parts |
| Barrier A | 32 parts |
| CMC | 2 parts |
| Cross-linker | 1 part |

The coatings were applied with a blade onto the surface of the papers to be tested. About 1.6 to 1.8 g/m² of the coatings to be tested was transferred to the surface of the paper. After that pure PVA B or mixture, where 1 % or 10 % of PVA B was replaced with modified PVA containing the side chains containing the double bonds, was applied with a blade on the top of the first layer (ca. 0.2-0.3 g/m²). All papers were calendared before siliconizing.

The papers were air conditioned for at least 1 hour before the siliconization. The commercial silicone used in the test was prepared just before the siliconization. The silicon was applied with a blade and cured immediately by infrared radiation and a hot cylinder. About 1.3 g/m² of silicon was transferred onto the papers.

Rub off was tested immediately after the siliconization and during conditioning under a moisture hood (*T* = 50°C and moisture RH 75 %) as a function of time. The effect of a commercial label on the production of rub off was studied at the same time (acrylate adhesive).

### Results

The rub off results are shown in Table 5. For coatings 2 and 3 the rub off was detected immediately, but for coating 1 after about 6 weeks. If PVA B was coated on the top of coatings 1 or 2 or 3, the rub off took place after ca. 2-3 weeks and the result did not remarkably depend on the coating below PVA B layer. With coating, where the commercial PVA B was partly replaced modified PVA (1 % or 10 % of modified PVA containing side chains with double bonds, 5 carbons in side chains and nominally 5 % of PVA OH groups were grafted), rub off was not detected during test period.

**Table 5: The development of rub off in layered structures at the temperature of 50°C and at the moisture of RH 75% as a function of time. (1 = good quality, no rub off; 2 = rub off detected; and 3 = distinct rub off). The first layer was mixture of commercial pigment, barrier polymer A, PVA A, carboxy methyl cellulose (CMC), and cross-linker, and the another layer was pure PVA B or mixture of PVA B and modified PVA. Composition of coatings 1, 2, and 3 are represented above. Symbols in the table: a: paper area outside a label, b: area under a label. Numbers after PVA B and M-PVA means that how many parts of the above layer contain these polymers.**

| | 0 h | 1 wk | | 2 wk | | 3 wk | | 4 wk | | 6 wk | | 8 wk | |
|---|---|---|---|---|---|---|---|---|---|---|---|---|---|
| Sample | a | a | b | a | b | a | b | a | b | a | b | a | b |
| Coating 1 | 1 | 1 | 1 | 1 | 1 | 1 | 1 | 1 | 1-2 | 1-2 | 2-3 | 2 | 3 |
| Coating 1 + (PVA B) | 1 | 1 | 1 | 1 | 1 | 1 | 2 | 1-2 | 3 | 2 | 3 | 3 | 3 |
| Coating 1 + (PVA B 99 + M-PVA 1) | 1 | 1 | 1 | 1 | 1 | 1 | 1 | 1 | 1 | 1 | 1 | 1 | 1 |
| Coating 1 + (PVA B 90 + M-PVA 10) | 1 | 1 | 1 | 1 | 1 | 1 | 1 | 1 | 1 | 1 | 1 | 1 | 1 |
| Coating 2 | 2-3 | 3 | 31 | 3 | 3 | 3 | 3 | 3 | 3 | 3 | 3 | 3 | 3 |
| Coating 2 + (PVA B) | 1 | 1 | 1 | 1 | 1-2 | 1 | 2-3 | 1-2 | 3 | 2-3 | 3 | 3 | 3 |
| Coating 2 + (PVA B 99 + M-PVA 1) | 1 | 1 | 1 | 1 | 1 | 1 | 1 | 1 | 1 | 1 | 1 | 1 | 1 |
| Coating 2 + (PVA B 90 + M-PVA 10) | 1 | 1 | 1 | 1 | 1 | 1 | 1 | 1 | 1 | 1 | 1 | 1 | 1 |
| Coating 3 | 2 | 3 | 3 | 2 | 3 | 3 | 3 | 3 | 3 | 3 | 3 | 3 | 3 |
| Coating 3 + (PVA B) | 1 | 1 | 1 | 1 | 1-2 | 1-2 | 2-3 | 2 | 3 | 3 | 3 | 3 | 3 |
| Coating 3 + (PVA B 99 + M-PVA 1) | 1 | 1 | 1 | 1 | 1 | 1 | 1 | 1 | 1 | 1 | 1 | 1 | 1 |
| Coating 3 + (PVA B 90 + M-PVA 10) | 1 | 1 | 1 | 1 | 1 | 1 | 1 | 1 | 1 | | 1 | 1 | 1 |

### Summary

The results showed that the treatment agent with polymeric backbone grafted with side chains containing double bonds reduce effectively the rub off even it is applied on the top of pigmented barrier coating. This kind of layered structure can have the superior paper properties, because the barrier layer enables low absorption levels and almost pin hole free surface and the layer containing modified PVA reduce the risk for the rub off.

## Claims

1. A release liner base material comprising a paper substrate and a surface treating layer applied to a surface of the paper substrate, **characterized in that** the surface treating layer contains a surface treating agent containing polymer having vinyl groups connected to the polymer wherein the polymer comprises a water-soluble polymeric backbone obtained from a water-soluble carrier polymer selected from polyvinyl alcohol, polyethylene glycol, polyethylene oxide, polyvinyl amine, starch, starch ester, starch ether, carboxymethyl cellulose, carboxymethyl cellulose ether, carboxymethyl cellulose ester, xanthan and polyacrylamide.

2. The release liner base material according to claim 1, **characterized in that** the surface treating agent makes up from 0.01 to 100 percent of the total weight of the surface treating layer.

3. The release liner base material according to claim 1, **characterized in that** the paper substrate is a glassine paper or that the paper substrate is made of a film coated paper.

4. A method of producing a release liner base material comprising a paper substrate and a surface treating layer on a surface of the paper substrate, **characterized in that** the method comprises:
- forming a surface treating agent by connecting vinyl groups to a polymer; and
- applying at least the surface treatment agent to the surface of the release liner paper substrate to form the surface treating layer.

5. The method according to claim 4, **characterized in that** the surface treating layer consists exclusively of the surface treating agent.

6. The use of a release liner base material as defined in any of the claims 1 to 3 for release liners.

## Patentansprüche

1. Trennfolienbasismaterial, das ein Papiersubstrat und eine Oberflächenbehandlungsschicht, die auf eine Oberfläche des Papiersubstrats aufgebracht ist, umfasst, **dadurch gekennzeichnet, dass** die Oberflächenbehandlungsschicht ein Oberflächenbehandlungsmittel enthaltenes Polymer enthält, das Vinylgruppen aufweist, die mit dem Polymer verbunden sind, wobei das Polymer ein wasserlösliches Polymergerüst umfasst, gewonnen aus einem wasserlöslichen Trägerpolymer ausgewählt aus Polyvinylalkohol, Polyethylenglykol, Polyethylenoxid, Polyvinylamin, Stärke, Stärkeester, Stärkeether, Carboxymethylcellulose, Carboxymethylcelluloseether, Carboxymethylcelluloseester, Xanthan oder Polyacrylamid.

2. Trennfolienbasismaterial nach Anspruch 1, **dadurch gekennzeichnet, dass** das Oberflächenbehandlungsmittel 0,01 bis 100 Prozent des Gesamtgewichts der Oberflächenbehandlungsschicht ausmacht.

3. Trennfolienbasismaterial nach Anspruch 1, **dadurch gekennzeichnet, dass** das Papiersubstrat ein Pergaminpapier ist oder dass das Papiersubstrat aus folienbeschichtetem Papier hergestellt ist.

4. Verfahren zur Produktion eines Trennfolienbasismaterials, das ein Papiersubstrat und eine Oberflächenbehandlungsschicht auf einer Oberfläche des Papiersubstrats umfasst, **dadurch gekennzeichnet, dass** das Verfahren Folgendes umfasst:
- Bilden eines Oberflächenbehandlungsmittels durch Verbinden von Vinylgruppen mit einem Polymer; und
- Aufbringen mindestens des Oberflächenbehandlungsmittels auf die Oberfläche des Trennfolienpapiersubstrats, um die Oberflächenbehandlungsschicht zu bilden.

5. Verfahren nach Anspruch 4, **dadurch gekennzeichnet, dass** die Oberflächenbehandlungsschicht ausschließlich aus dem Oberflächenbehandlungsmittel besteht.

6. Verwendung eines wie in einem der Ansprüche 1 bis 3 definierten Trennfolienbasenmaterials für Trennfolien.

## Revendications

1. Matière de base d'une pellicule anti-adhésive comprenant un substrat en papier et une couche de traitement de surface appliquée sur une surface du substrat en papier, **caractérisée en ce que** la couche de traitement de surface contient un polymère contenant un agent de traitement de surface, lequel polymère possédant des groupes vinyle liés au polymère, dans lequel le polymère comprend un squelette polymère soluble dans l'eau obtenu à partir d'un polymère porteur soluble dans l'eau choisi parmi de l'alcool polyvinyle, du polyéthylène glycol, du polyéthylène oxyde, du polyvinyle amine, de l'amidon, de l'ester d'amidon, de l'éther d'amidon, du carboxyméthylcellulose, de l'éther carboxyméthylcellulosique, de l'ester carboxyméthylcellulosique, de la gomme xanthane et du polyacrylamide.

2. Matière de base d'une pellicule anti-adhésive selon la revendication 1, **caractérisée en ce que** l'agent de traitement de surface constitue de 0,01 à 100 pour cent du poids total de la couche de traitement de surface.

3. Matière de base d'une pellicule anti-adhésive selon la revendication 1, **caractérisée en ce que** le substrat en papier est de la glassine ou **en ce que** le substrat en papier est réalisé à partir d'un papier pelliculé.

4. Procédé de production d'une matière de base d'une pellicule anti-adhésive comprenant un substrat en papier et une couche de traitement de surface sur une surface du substrat en papier, **caractérisé en ce que** le procédé comprend :
- former un agent de traitement de surface en connectant des groups vinyle à un polymère; et
- appliquer l'au moins un agent de traitement de surface sur la surface du substrat en papier de la pellicule anti-adhésive pour former la couche de traitement de surface.

5. Procédé selon la revendication 4, **caractérisé en ce que** la couche de traitement de surface consiste exclusivement en l'agent de traitement de surface.

6. Utilisation d'une matière de base d'une pellicule anti-adhésive telle que définie dans l'une quelconque des revendications 1 à 3 pour des pellicules anti-adhésives.
